# EUROPEAN PATENT APPLICATION

(11) **EP 2 999 160 A1**
(43) Date of publication of application: **23.03.2016**
(21) Application number: 15174311.9
(22) Date of filing: 29.06.2015
(51) Int. Cl.: H04L 12/12

(54) **TRANSMISSION DEVICE AND RECEPTION DEVICE FOR TRANSMISSION AND RECEPTION OF WAKE-UP PACKET, AND WAKE-UP SYSTEM AND METHOD**

(30) Priority: 16.09.2014 KR 20140122615; 24.02.2015 KR 20150025647
(71) Applicant: Samsung Electronics Co., Ltd., Suwon-si, Gyeonggi-do (KR)
(72) Inventor: LEE, Jin, Gyeonggi-do (KR); KIM, Ki Hun, Gyeonggi-do (KR)
(74) Representative: Walaski, Jan Filip

(57) **Abstract**

Disclosed herein are a transmission device and a reception device for transmission and reception of a wake-up packet, a wake-up system, and a wake-up method. The transmission device which is connected to a reception device and transmits a data packet using wired or wireless communication, includes: a transmission device control unit configured to generate the wake-up packet including wake-up information for waking up the reception device and operational information for setting a function which the reception device performs after waking up the reception device; and a transmission device communication unit configured to transmit the wake-up packet to the reception device. According to the transmission device and the reception device for transmission and reception of the wake-up packet, the wake-up packet and the wake-up method, the transmission device transmits the wake-up packet including not only the wake-up information but also the operational information. Further, the reception device receives the wake-up packet and performs the operation for setting the function after waking up. The setting of the function after waking up is performed by transmitting and receiving the wake-up packet. Accordingly, a more convenient service is provided to a user.

## Description

The present invention relates to a transmission device and a reception device for transmission and reception of a wake-up packet, a wake-up system, and a wake-up method.

Electronic devices may be connected to various external devices through various networks or communication systems. Technology which remotely controls various external devices such as a television (TV), an audio, a printer, and a computer is being developed together with technological developments in networks or communication systems. Further, studies for minimizing power consumption of the devices used for wireless personal area networks or sensor networks are actively being performed.

As an example of a scheme of minimizing the power consumption of the external devices, a method in which the external devices are maintained in a sleep mode when the communication is not needed, and a method of waking up the external devices is applied only when the communication is needed is employed. In this case, the wake-up method may be performed remotely.

There are various wake-up methods as a method for waking up. For example, in order to wake up the external devices, the electronic device transmits a packet including a wake-up control command to the external device, and the external device receives the packet and is turned on according to the wake-up control command included in the packet. However, a subsequent function after waking up the external device in addition to the wake-up of the external device should be considered. Accordingly, technology for setting the subsequent function is needed.

Therefore, it is an aspect of the present invention to provide a transmission device and a reception device for transmission and reception of a wake-up packet, a wake-up system, and a wake-up method.

Additional aspects of the invention will be set forth in part in the description which follows and, in part, will be obvious from the description, or may be learned by practice of the invention.

In accordance with one aspect of the present invention, a transmission device for transmission of a wake-up packet, the transmission device is connected to a reception device and transmits a data packet using wired or wireless communication, includes: a transmission device control unit configured to generate the wake-up packet including wake-up information for waking up the reception device and operational information for setting a function in which the reception device performs after waking up the reception device; and a transmission device communication unit configured to transmit the wake-up packet to the reception device.

A plurality of reception devices may be provided as the reception device.

The wake-up packet may be provided as data including a header, the wake-up information, and the operational information.

The wake-up information may include wake-up identification (ID) and a Wakee address.

The wake-up ID may include a control command for performing wake-up.

The wake-up ID may be provided using Wake-on-LAN (WOL) or Wake on Wireless LAN (WoWLAN).

The Wakee address may include ID information of a Wakee which is the reception device selected to perform wake-up among the reception devices.

The Wakee address may be provided as a MAC address of the Wakee.

The operational information may include a control command for setting a function in which the Wakee performs after a wake-up of the Wakee.

The operational information may include an operation code corresponding to a function which the Wakee performs after waking up the Wakee.

The wake-up packet may further include password information including at least one of a password for wake-up and a password for setting a function.

The wake-up packet may include a first packet provided as data including the wake-up information, and a second packet provided as data including the operational information.

The communication unit may sequentially transmit the first packet and the second packet.

In accordance with another aspect of the present invention, a reception device for reception of a wake-up packet, the reception device is connected to a transmission device and receives a data packet using wired or wireless communication, includes: a reception device communication unit configured to receive the wake-up packet including wake-up information for waking up the reception device and operational information for setting a function which the reception device performs after waking up the reception device from the transmission device; and a reception device control unit configured to perform control to perform wake-up based on the wake-up information, and to set the function after waking up based on the operational information.

The communication unit may sequentially receive a first packet provided as data including the wake-up information, and a second packet provided as data including the operational information.

In accordance with still another aspect of the present invention, a wake-up system, includes: a transmission device configured to transmit a data packet; and a reception device configured to receive the data packet, wherein the transmission device generates a wake-up packet including wake-up information for waking up the reception device and operational information for setting a function which the reception device performs after waking up the reception device, and transmits the wake-up packet to the reception device, and the reception device receives the wake-up packet from the transmission device, performs wake-up based on the wake-up information and sets the function after waking up based on the operational information.

In accordance with yet another aspect of the present invention, a wake-up method, includes: receiving a data packet from a transmission device; determining whether the received data packet is a wake-up packet including wake-up information for waking up a reception device and operational information for setting a function which the reception device performs after waking up the reception device; and performing wake-up based on the wake-up information when the received packet is the wake-up packet, and setting the function after waking up based on the operational information.

The wake-up information may include a wake-up ID and a Wakee address.

The determining of whether the received data packet is the wake-up packet may include determining whether the wake-up ID is included in the received data packet. The Wakee address may include ID information of a Wakee selected to perform the wake-up.

The performing of the wake-up may include determining whether ID information of the reception device is identical to the ID information of the Wakee, and performing wake-up when the ID information of the reception device is identical to the ID information of the Wakee.

The wake-up packet may further include password information including at least one of a password for the wake-up and a password for setting a function.

The wake-up method may further include determining whether an input password is identical to the password of the password information.

The receiving of the data packet may include sequentially receiving a first packet including the wake-up information, and a second packet including the operational information.

These and/or other aspects of the invention will become apparent and more readily appreciated from the following description of the embodiments, taken in conjunction with the accompanying drawings of which:
FIG. 1 is a schematic diagram illustrating a wake-up system in accordance with one embodiment of the present invention;
FIG. 2A is a schematic diagram illustrating a wake-up system in accordance with another embodiment of the present invention;
FIG. 2B is a schematic diagram illustrating a wake-up system in accordance with still another embodiment of the present invention;
FIG. 3 is a schematic diagram illustrating a wake-up system in accordance with yet another embodiment of the present invention;
FIG. 4 is a block diagram illustrating an example of a wake-up system;
FIG. 5 is a schematic diagram illustrating a structure of a wake-up packet in accordance with one embodiment of the present invention;
FIG. 6 is a diagram illustrating a procedure in which a wake-up packet is generated;
FIG. 7 is a schematic diagram illustrating a structure of a wake-up packet in accordance with another embodiment of the present invention;
FIGS. 8A and 8B are diagrams for describing wake-up information of a wake-up packet;
FIG. 9 is a diagram for describing operational information of a wake-up packet;
FIGS. 10A and 10B are schematic diagrams illustrating a structure of a wake-up packet in accordance with still another embodiment of the present invention;
FIGS. 11A and 11B are diagrams illustrating a structure of a wake-up packet in accordance with yet another embodiment of the present invention;
FIG. 12 is a diagram for describing wake-up information in accordance with an embodiment of the present invention;
FIGS. 13A and 13B are diagrams for describing an operation of setting a screen mirroring function; FIG. 14 is a flowchart for describing a wake-up method in accordance with one embodiment of the present invention;
FIG. 15 is a flowchart for describing a wake-up method in accordance with another embodiment of the present invention; and
FIG. 16 is a flowchart for describing a wake-up method in accordance with still another embodiment of the present invention.

Embodiments described in this specification and constructions shown in the accompanying drawings are only preferable embodiments, and there are various modifications capable of replacing the embodiments and drawings at the application time of this application.

Hereinafter, a transmission device and a reception device of a wake-up packet, a wake-up system, and a wake-up method will be described in detail with reference to the accompanying drawings. Like reference numerals represent like components.

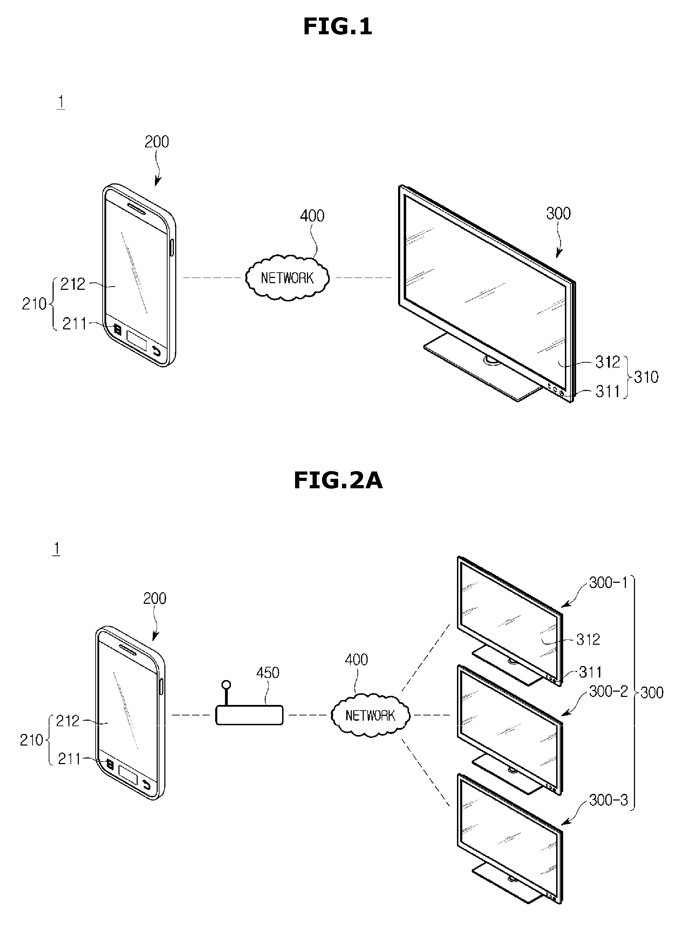

FIG. 1 is a schematic diagram illustrating a wake-up system in accordance with one embodiment of the present invention.

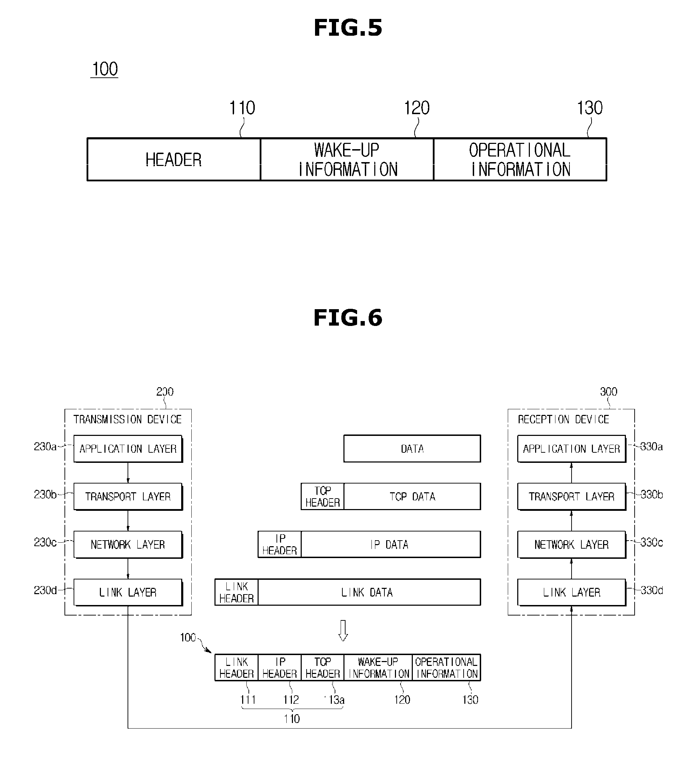

Referring to FIG. 1, a wake-up system 1 may include a transmission device 200 transmitting a wake-up packet (refer to 100 of FIG. 5) and a reception device 300 receiving the wake-up packet, and the transmission device 200 and the reception device 300 may be connected via a wired or wireless network 400. In other words, the wake-up packet 100 transmitted by the transmission device 200 may be transmitted to the reception device 300 via the network 400. Here, the wake-up packet 100 may be a packet including wake-up information for waking up the reception device 300 and operational information for setting a function after waking up, and detailed description with respect to the wake-up packet 100 will be described below.

The transmission device 200 may generate at least one wake-up packet 100, and transmit the generated wake-up packet to the reception device 300. The transmission device 200 may generate the wake-up packet 100 based on an input of a user.

The transmission device 200 may determine a function which the reception device 300 performs after waking up based on the input of the user, and include the operational information for setting the determined function in the wake-up packet 100. The user may input a wake-up command for waking up the reception device 300 and a function command to be performed after waking up to the transmission device 200, or input only the function command. Accordingly, the transmission device 200 may generate the wake-up packet 100 including the wake-up information and the operational information based on the wake-up command and the function command of the user. Alternatively, the transmission device 200 may generate the wake-up packet 100 including the wake-up information and the operational information according to the input of the function command of the user.

The transmission device 200 may set the reception device 300 to be woken up based on the input of the user. The user may input the reception device 300 to be woken up through a user interface unit 210 included in the transmission device 200, and select the reception device 300 by directional control of the transmission device 200. Accordingly, the transmission device 200 may set the reception device 300 based on the input of the user through the user interface unit 210. Alternatively, the transmission device 200 may sense the direction according to the operation of the user, and set the reception device 300 facing the transmission device 200 as the reception device 300 to be woken up.

The transmission device 200 may include identification information of the set reception device 300 in the wake-up packet 100. The reception device 300 may determine whether the wake-up packet 100 transmitted from the transmission device 200 is received based on the identification information included in the wake-up packet 100. Accordingly, the generated wake-up packet 100 may be transmitted to the set reception device 300, and wake up or operate the set reception device 300.

The user interface unit 210 included in the transmission device 200 may include an input unit 211 and a display unit 212.

The input unit 211 may include a hardware input device such as various types of buttons, a switch, a pedal, a keyboard, a mouse, a track ball, various types of levers, a handle, and a stick for the input of the user. The input unit 211 may include a graphic user interface (GUI) such as a touch pad, that is, a software input device, for the input of the user. The touch pad may be implemented as a touch screen panel (TSP) and have a mutual layer structure with the display unit 212.

The display unit 212 may be provided as a cathode ray tube (CRT), a digital light processing (DLP) panel, a plasma display panel, a liquid crystal display (LCD) panel, an electro luminescence (EL) panel, an electrophoretic display (EPD) panel, an electric chromic display (ECD) panel, a light emitting diode (LED) panel, or an organic light emitting diode (OLED) panel, but the present invention is not limited thereto.

As described above, when the input unit 211 is configured as the TSP having the mutual layer structure with the touch pad, the display unit 212 may be used as the input device in addition to the display device.

The reception device 300 may receive the wake-up packet 100, be turned on based on wake-up information included in the wake-up packet 100, and perform an operation of setting a set function based on the operational information included in the wake-up packet 100. At this time, the reception device 300 receiving the wake-up packet 100 may be every reception device 300 connected to the transmission device 200 through the network. Alternatively, only the reception device 300 selected by the user among the reception devices 300 connected to the transmission device 200 may receive the wake-up packet 100. Further, the power may be turned on based on the wake-up information, and the reception device 300 performing the operation based on the operational information may be the reception device 300 selected by the user.

A user interface unit 310 may be included in the reception device 300, similar to in the transmission device 200, and the user interface unit 310 included in the reception device 300 may include an input unit 311 and a display unit 312. The input unit 311 and the display unit 312 may be implemented to correspond to the input unit 211 and the display unit 212 of the transmission device 200, and thus detailed description thereof will be omitted. However, the reception device 300 may not include the user interface unit 310, or may include only one among the input unit 311 and the display unit 312.

Meanwhile, as shown in FIG. 1, the transmission device 200 may be a terminal such as a smart phone, and a personal digital assistant (PDA). Further, as shown in FIG. 1, the reception device 300 may be a single electronic device such as a television (TV). In other words, the wake-up packet 100 may be transmitted to the single reception device 300, and wake up or operate the single reception device 300.

FIG. 2A is a schematic diagram illustrating a wake-up system in accordance with another embodiment of the present invention.

Referring to FIG. 2A, a wake-up system 1 may include a transmission device 200 transmitting a wake-up packet 100, and a reception device 300 receiving the wake-up packet 100, and the transmission device 200 and the reception device 300 may be connected through an access point (AP) 450 and a wired or wireless network 400. In other words, the wake-up system 1 may further include an access point (AP) 450 according to a type of the transmission device 200 or the reception device 300. The transmission device 200 and the reception device 300 which are located within a predetermined distance from the AP 450 may be connected through the network 400, and the network 400 may transmit the wake-up packet 100 generated in the transmission device 200 to the reception device 300 connected thereto.

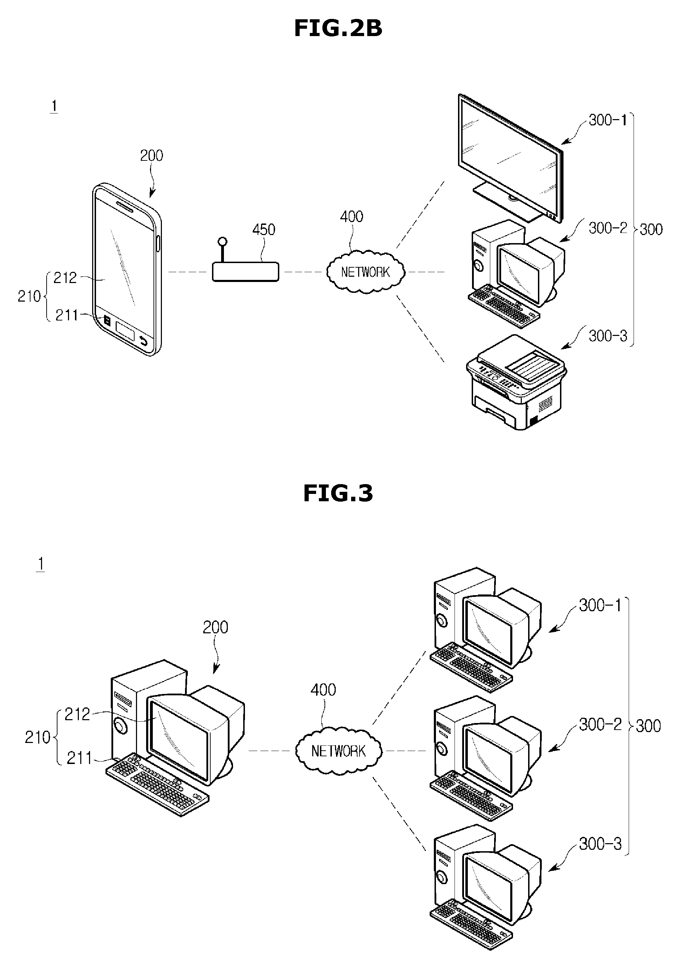

Further, there may be a plurality of reception devices 300, as shown in FIGS. 2A and 2B. The reception device 300 may include a first reception device 300_1, a second reception device 300_2, and a third reception device 300_3, and the first reception device 300_1, the second reception device 300_2, and the third reception device 300_3 may be provided as electronic devices of the same type. FIG. 2A is only an example, and the reception device 300 may be provided to have a greater or smaller number than that of the example of FIG. 2A.

Every reception device 300 connected to the transmission device 200 may receive the wake-up packet 100 from the transmission device 200. Alternatively, only the reception device selected by the user among the reception devices 300-1 to 300-3 connected to the transmission device 200 may receive the wake-up packet 100. However, the reception device 300 being turned on based on the wake-up information and performing the operation based on the operational information may be the reception device 300 selected by the user.

For example, when the second reception device 300_2 is selected by the user, although all of the first reception device 300_1, the second reception device 300_2, and the third reception device 300_3 receive the wake-up packet 100, only the second reception device 300_2 may be turned on and perform the operation by the wake-up packet 100. Further, only the second reception device 300_2 selected by the user may receive the wake-up packet 100, and be turned on and perform the operation according to information of the wake-up packet 100.

FIG. 2B is a schematic diagram illustrating a wake-up system in accordance with still another embodiment of the present invention.

Referring to FIG. 2B, a wake-up system 1 may include a transmission device 200 transmitting a wake-up packet 100, and a reception device 300 receiving the wake-up packet 100, and the transmission device 200 and the reception device 300 may be connected through an AP 450 and a wired or wireless network 400.

At this time, a plurality of reception devices 300 may be provided as the reception device, and the plurality of reception devices 300 may be provided as electronic devices of different types. For example, the first reception device 300_1 may be a TV, the second reception device 300_2 may be a computer, and the third reception device 300_3 may be a printer. Further, the AP 450 may not be included in the wake-up system 1 according to types of the transmission device 200 and the reception device 300, or may be omitted.

FIG. 3 is a schematic diagram illustrating a wake-up system in accordance with yet another embodiment of the present invention.

Referring to FIG. 3, a wake-up system 1 may include a transmission device 200 transmitting a wake-up packet 100 and a reception device receiving the wake-up packet 100, and the transmission device 200 and the reception device 300 may be connected through a wired or wireless network 400.

At this time, the transmission device 200 and the reception device 300 may be devices of the same type. For example, both of the transmission device 200 and the reception device 300 may be computers, subcomputers 300_1, 300_2, and 300_3 may configure the reception device 300, and a main computer controlling the subcomputers 300_1, 300_2, and 300_3 may configure the transmission device 200.

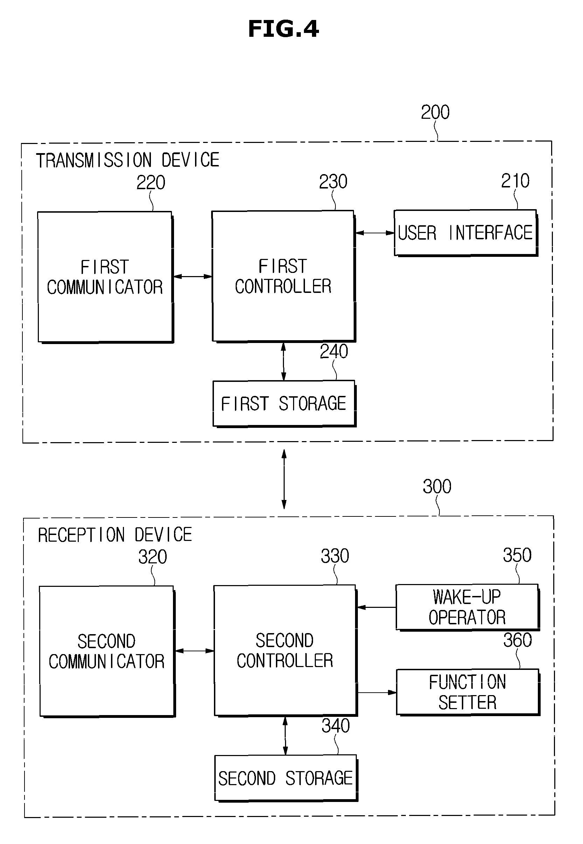

FIG. 4 is a block diagram illustrating an example of a wake-up system.

Referring to FIG. 4, a wake-up system 1 may include the transmission device 200 and the reception device 300. The transmission device 200 may include a user interface unit 210, a communication unit 220, a control unit 230, and a storage unit 240, and the reception device 300 may include a communication unit 320, a control unit 330, a wake-up unit 350, a function setting unit 360, and a storage unit 340.

As described above, the user interface unit 210 may include an input unit 211 and a display unit 212, receive a user command, and provide a user interface. The user may select the reception device 300 to perform wake-up and setting operations according to the information of the wake-up packet 100 through the user interface unit 210. The user may select a function to be performed after waking up through the user interface unit 210.

The communication unit 220 may transmit the wake-up packet 100 generated through the control unit 230 to the reception device 300. The communication unit 220 may be connected to at least one reception device 300 through the wired or wireless network 400. The communication unit 220 may transmit the wake-up packet 100 to every reception device 300 connected to the communication unit 220, or transmit the wake-up packet 100 to only the reception device 300 selected by the user.

For this, the communication unit 220 may include various communication modules such as a wireless Internet module, a local area communication module, and a mobile communication module.

The wireless Internet module may refer to a module performing communication while connected to an external network according to a communication protocol such as a wireless local area network (WLAN), Wi-Fi, wireless broadband (Wibro), world interoperability for microwave access (Wimax), and high-speed downlink packet access (HSDPA).

The local area communication module may refer to a module performing communication with the external device which is located in a local area according to a local area communication method such as Bluetooth, radio frequency identification (RFID), infrared data association (IrDA), ultra-wideband (UWB), and Zigbee.

The mobile communication module may refer to a module performing communication while connected to a mobile communication network according to various mobile communication standards such as third generation (3G), third generation partnership project (3GPP), and long-term evolution (LTE).

However, the communication unit 220 is not limited thereto. In addition, when the communication unit 220 performs communication with the reception device 300 and transmits the packet or information included in the packet, the communication unit 220 may be a communication module having a different type in addition to the communication modules described above.

The control unit 230 may generate the wake-up packet 100. Here, as described above, the wake-up packet 100 may be defined as at least one packet including wake-up information for waking up the reception device 300 and operational information for setting a function after waking up. That is, the wake-up information and the operational information may be transmitted by being divided into a plurality of packets.

The reception device 300 to which the wake-up packet is transmitted may be the reception device 300 selected by the user, but is not limited thereto.

Particularly, the wake-up packet 100 may be transmitted to only the reception device 300 selected by the user, but may be transmitted to every reception device 300 connected to the network 400. When the wake-up packet is transmitted to every reception device 300, the reception device 300 may determine whether to receive the wake-up packet 100 based on the identification information included in the wake-up packet 100. That is, the reception device 200 may process only the wake-up packet 100 corresponding to the identification information, and may not process the wake-up packet 100 to be received at another reception device 300, that is, the wake-up packet having another identification information.

FIG. 5 is a schematic diagram illustrating a structure of a wake-up packet in accordance with one embodiment of the present invention.

Referring to FIG. 5, the control unit 230 may generate wake-up information 120 for waking up the reception device 300 and operational information 130 for setting a function which the reception device 300 which is woken up performs based on the selection of the user, and generate the wake-up packet 100 for transmitting the generated wake-up information 120 and the operational information 130 to the reception device 300.

The wake-up information 120 and the operational information 130 may be included in the wake-up packet 100, as shown in FIG. 5.

Particularly, the control unit 230 may generate the wake-up packet 100 including a header 110, the wake-up information 120, and the operational information 130. The wake-up packet 100 may include the wake-up information 120 including a control command or control information for waking up the reception device 300 selected by the user. Further, the wake-up packet 100 may include the operational information 130 including the control command or the control information for setting a function selected by the user after the reception device 300 is woken up. Moreover, the wake-up packet 100 may include the header 110 in front of the wake-up information 120 and the operational information 130. The header 110 may be generated according to a network method or a protocol type, etc. between the transmission device 200 and the reception device 300. Detailed description thereof will be described with reference to FIG. 6.

FIG. 6 is a diagram illustrating a procedure in which a wake-up packet is generated.

As shown in FIG. 6, a hierarchical structure of the wake-up system 1 may include link layers 230d and 330d, network layers 230c and 330c, transport layers 230b and 330b, and application layers 230a and 330a. Particularly, the transmission device 200 or the control unit 230 of the transmission device 200 may include the link layer 230d, the network layer 230c, the transport layer 230b, and the application layer 230a, and similarly, the reception device 300 or the control unit 330 of the reception device 300 may include the link layer 330d, the network layer 330c, the transport layer 330b, and the application layer 330a.The wake-up packet 100 may be formed while passing through a plurality of layers included in the transmission device 200 and accumulating data.

The application layer 230a may generate data 130 to be transmitted. Here, the data 130 to be transmitted may include wake-up information and operational information. Further, the application layer 230a may perform a function of converting a format of the generated data into a data format of the reception device 300.

Data may be added to the data passed through the application layer 230a in the transport layer 230b, and thus transport layer data (for example, transmission control protocol (TCP) data) may be generated. Further, the transport layer 230b may attach a header to the transport layer data. For example, as shown in FIG. 6, data of the application layer 230a may be provided in a TCP packet form in which a TCP header and TCP data are combined while passing through the transport layer 230b.

Data may be added to the data transmitted from the transport layer 230b in the network layer 230c, and the network layer data (for example, Internet protocol (IP) data) may be generated. Further, the network layer 230c may add a header to the network layer data. For example, the TCP packet generated in the transport layer 230b may be provided in an IP packet format in which the IP header and the IP data are combined while passing through the network layer 230c.

Data may be added to the data transmitted from the network layer 230c in the link layer 230d, and the link layer data may be generated. Further, the network layer 230c may attach a header to the link layer data. For example, the header of the link layer may be provided in a MAC header format, or in an Ethernet header format.

As such, the wake-up packet 100 may be finally generated while passing through the application layer 230a, the transport layer 230b, the network layer 230c, and the link layer 230d of the transmission device 200, and as shown in FIG. 6, the wake-up packet 100 may be configured as data including the wake-up information 120 and the operational information 130, and a header 110 including a link header 111, an IP header 112, and a TCP header 113a.

Here, the header 110 may include address information of the transmission device 200 transmitting the wake-up packet 100, and address information of the reception device 300 receiving the wake-up packet 100. The link header 111 may include the MAC addresses or the Ethernet addresses of the transmission device 200 and the reception device 300. The IP header 112 may include the IP addresses of the transmission device 200 and the reception device 300. The TCP header 113a may include port addresses of the transmission device 200 and the reception device 300.

Address information of the transmission device 200 transmitting the wake-up packet 100 and the reception device 300 receiving the wake-up packet 100 may be included in the wake-up packet 100 by forming separate data. The address information including the MAC addresses or the Ethernet addresses, the IP addresses, and the port addresses of the transmission device 200 and the reception device 300 may be separately included in the wake-up packet 100, and unlike those shown in FIG. 6, the wake-up packet 100 may be provided to include the header 110, the wake-up information 120, the operational information 130, and the address information.

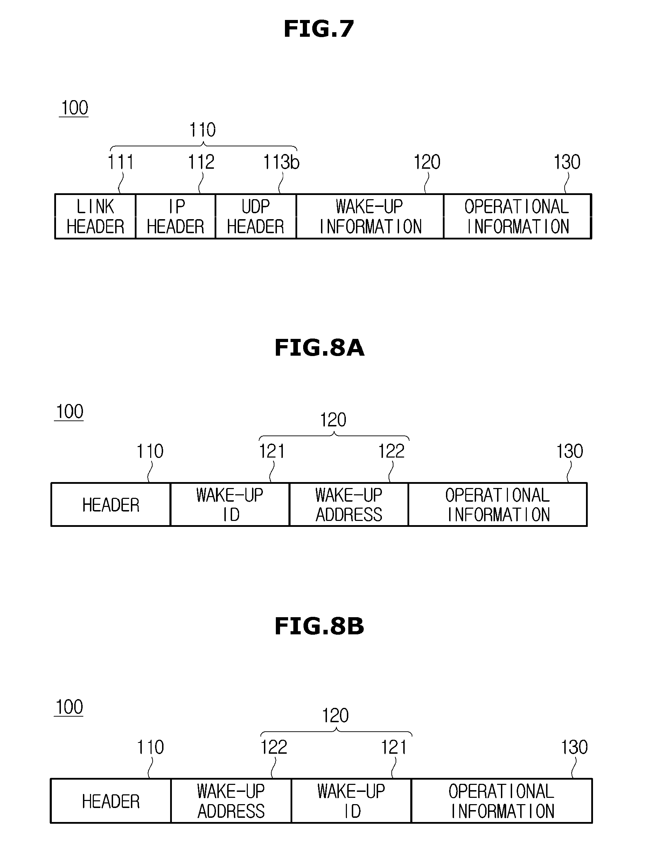

FIG. 7 is a schematic diagram illustrating a structure of a wake-up packet in accordance with another embodiment of the present invention.

The wake-up packet 100 may be provided as data including the wake-up information 120 and the operational information 130, and at this time, may include a link header 111, an IP header 112, and a user datagram protocol (UDP) header 113b, as shown in FIG. 7. That is, the wake-up packet 100 may be generated by sequentially attaching the UDP header 113b, the IP header 112, and the link header 111 to the data including the wake-up information 120 and the operational information 130.

The wake-up packet 100 generated in the transmission device 200 may be transmitted to the reception device 300. At this time, the reception device 300 to receive the wake-up packet 100 may be determined based on the address information of the reception device 300 included in the wake-up packet 100. In other words, when the wake-up packet 100 includes the address information of every reception device 300 connected to the transmission device 200, the wake-up packet 100 may be transmitted to every reception device 300. Further, when the wake-up packet 100 includes the address information of one among the reception devices 300 connected to the transmission device 200, the wake-up packet 100 may be transmitted only to the corresponding reception device 300.

The wake-up packet 100 may be transmitted to the link layer 330d of the reception device 300, and the wake-up packet 100 or the data included in the wake-up packet 100 may be read while passing through the link layer 330d, the network layer 330c, the transport layer 330b, and the application layer 330a. Detailed description of a read operation of the reception device 300 will be described below.
FIGS. 8A and 8B are diagrams for describing wake-up information of a wake-up packet. Referring to FIGS. 8A and 8B, the wake-up information 120 configuring the wake-up packet 100 may include a wake-up identification (ID) 121, and a Wakee address 122.

The wake-up ID 121 may be a control command for waking up, that is, a control command for turning the external device on or for waking it up from a sleep mode, and may be provided using wake-on-LAN (WOL), and wake on wireless LAN (WoWLAN), but the present invention is not limited thereto.

The Wakee address 122 may refer to ID information of the reception device 300 to be woken up. As described above, the user may select the reception device 300 to be woken up, and at this time, the reception device 300 to be woken up may be referred to as a Wakee. That is, the user may select the Wakee, the control unit 230 may use the ID information of the Wakee, for example, the MAC address of the Wakee as the Wakee address 122 based on the selection of the user, and include the Wakee address in the wake-up information 120. The reception device 300 may determine whether the Wakee address 122 included in the wake-up information 120 is identical to its own ID information, and determine whether to perform the wake-up based on the determination result. Detailed description thereof will be described below.

The control unit 230 may sequentially arrange the wake-up ID 121 and the Wakee address, and generate the wake-up information 120. As shown in FIG. 8A, the control unit 230 may generate the wake-up information 120 so that the Wakee address 122 is arranged after the wake-up ID 121, and as shown in FIG. 8B, the control unit 230 may generate the wake-up information 120 so that the wake-up ID 121 is arranged after the Wakee address 122, and there may not be limited to an arrangement sequence thereof.

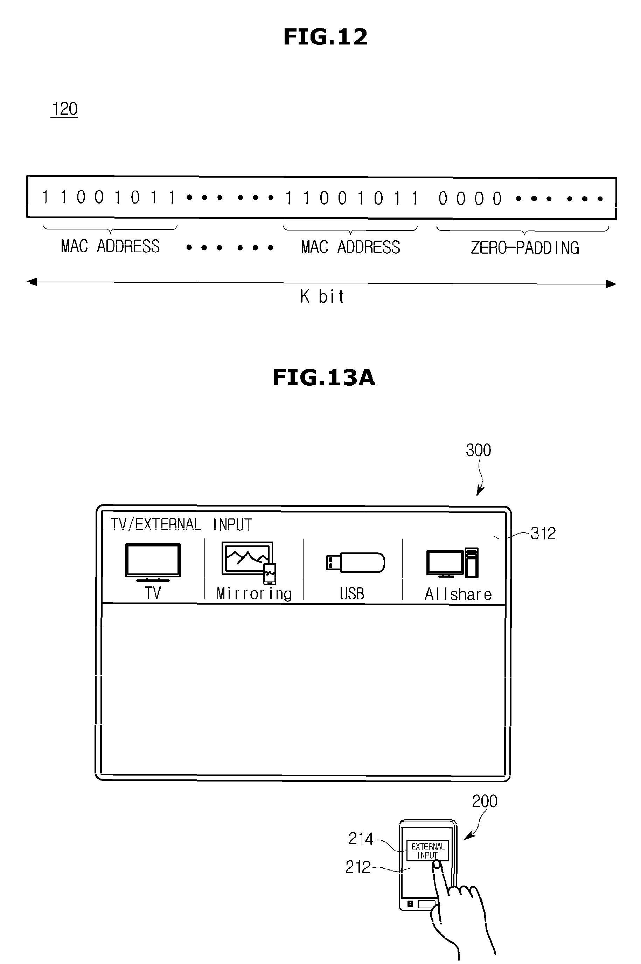

Meanwhile, an example in which the wake-up information 120 includes the wake-up ID 121 and the Wakee address 122 is illustrated in FIG. 8, but is not limited thereto. For example, the wake-up information 120 may be provided according to a predetermined standard protocol prescribed to wake-up the reception device 300 to be woken up. This will be described in detail in FIG. 12.

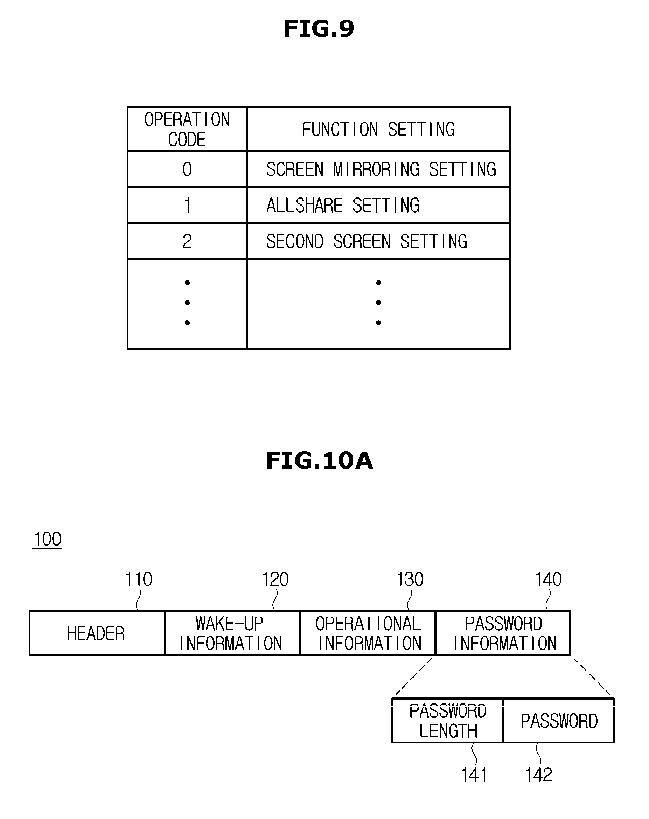

FIG. 9 is a diagram for describing operational information of a wake-up packet.

Referring to FIG. 9, the operational information 130 may be information of an operation of setting a function which the reception device 300 performs after waking up, include a control command for setting the function, and be provided as an operation code corresponding to the function.

For example, when the reception device 300 is a smart television, the reception device 300 may perform a screen mirroring function, an allshare function, and a second screen function, etc. The storage unit 240 may previously store the operation code corresponding to the function of the reception device 300. That is, the storage unit 240 may store the operation code "0" corresponding to the operation of setting the screen mirroring function, store the operation code "1" corresponding to the operation of setting the allshare function, and store the operation code "2" corresponding to the operation of setting the second screen function.

When the function after waking up is selected by the input of the user, the control unit 230 may use the operation code of setting the function selected among the operation codes stored in the storage unit 240 as the operational information 130, and include the operation code in the wake-up packet 100. In the example described above, when the user selects the screen mirroring function, the control unit 230 may include the operation code "0" of setting the screen mirroring function in the wake-up packet 100.

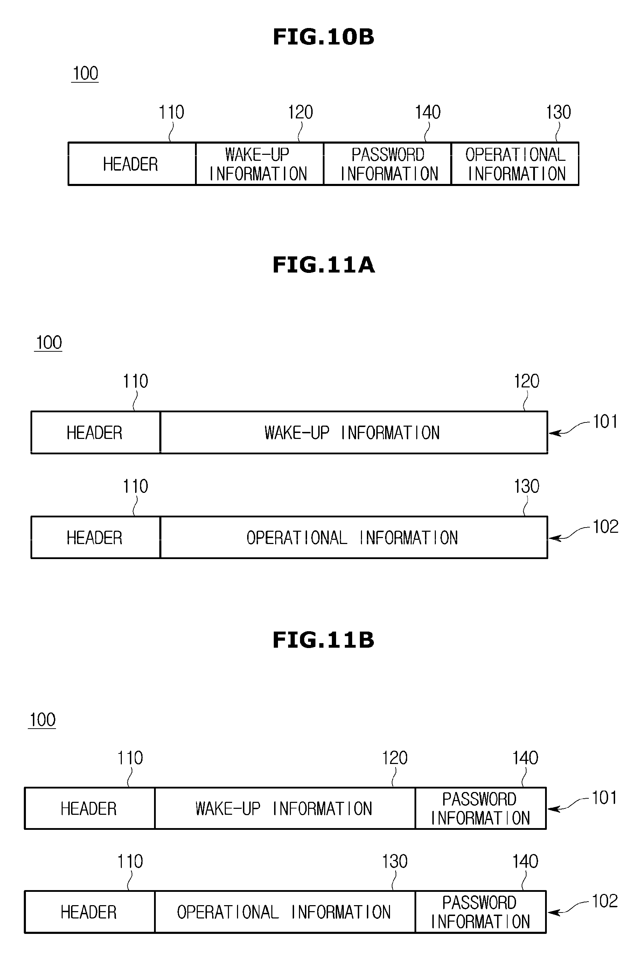

As described above, the control unit 230 may generate the wake-up packet 100 including the header 110, the wake-up information 120, and the operational information 130. Meanwhile, the wake-up packet 100 may further include password information (140 of FIG. 10A), and description thereof will be described below in detail with reference to FIGS. 10A and 10B.

FIGS. 10A and 10B are schematic diagrams illustrating a structure of a wake-up packet in accordance with another embodiment of the present invention.

Referring to FIGS. 10A and 10B, the control unit 230 may generate the wake-up packet 100 including the header 110, the wake-up information 120, the operational information 130, and the password information 140. The control unit 230 may be provided to have a plurality of layers, that is, the application layer 230a, the transport layer 230b, the network layer 230c, and the link layer 230d as described above, and may generate the wake-up packet 100 in which data including the wake-up information 120, the operational information 130, and the password information 140, and the header 110 attached thereto is included. Here, since the header 110, the wake-up information 120, and the operational information 130 are described with reference to FIGS. 5 to 9, description thereof will be omitted below.

As shown in FIG. 10A, the password information 140 may include a password length 141 and a password 142. Here, the password length 141 may refer to a length of a set password and may be 0 to 16. Particularly, when the password length 141 is 0, it may indicate that the password 142 is not set. Further, the password length 141 may be provided as 1 byte.

The password 142 may be a password for performing wake-up, and a password for performing the setting operation. Further, the password for performing the wake-up and the password for performing the setting operation may be simultaneously provided. That is, a plurality of passwords 142 may be provided. When the password 142 is the password for performing the wake-up, the reception device 300 may perform the wake-up by an input of the set password, and when the password 142 is the password for performing the setting operation, the reception device 300 may perform the setting operation by the input of the set password.

The control unit 230 may generate the wake-up information 120 by sequentially arranging the wake-up information 120, the operational information 130, and the password information 140. The control unit 230 may generate the wake-up information 120 so that the password information 140 is arranged after the operational information 130, as shown in FIG. 10A, and may generate the wake-up information 120 so that the operational information 130 is arranged after the password information 140, as shown in FIG. 10B. Further, unlike FIGS. 10A and 10B, the wake-up information 120 and the operational information 130 may be sequentially arranged after the password information 140.

As described above, the wake-up information 120 and the operational information 130 may be provided as one wake-up packet 100 and may be simultaneously transmitted, or may be transmitted by being divided into a plurality of packets. Hereinafter, with reference to FIGS. 11 and 12, the wake-up packet 100 including the plurality of packets will be described in detail.

FIGS. 11A and 11B are diagrams illustrating a structure of a wake-up packet in accordance with yet another embodiment of the present invention, and FIG. 12 is a diagram for describing wake-up information in accordance with an embodiment of the present invention.

Referring to FIG. 11A, the control unit 230 may generate the wake-up packet 100 by dividing the wake-up information 120 and the operational information 130 into a plurality of packets. That is, the wake-up information 120 and the operational information 130 may be included in a packet different from each other. Particularly, a first packet 101 may include the header 110 and the wake-up information 120, and a second packet 102 may include the header 110 and the operational information 130. The control unit 230 may generate the first packet in which the wake-up information 120 is included and the second packet in which the operational information 120 is included using the plurality of layers 230a to 230d described above.

At this time, the wake-up information 120 of the first packet 101 may be generated according to a standard protocol which is previously prescribed. The wake-up information 120 may be generated to have a k-bit size according to the standard protocol as shown in FIG. 12. Particularly, the control unit 230 may generate the wake-up information 120 by performing zero-padding so that the wake-up information 120 has the k-bit size after repeating the MAC address of the reception device 300 to be woken up a predetermined number of times (for example, eight times).

The operational information 130 of the second packet 102 may be generated according to the standard protocol which is previously prescribed, or only the first packet 101 may be generated according to the standard protocol which is previously prescribed.

The first packet 101 and the second packet 102 may further include the password information 140 as shown in FIG. 11B. At this time, the password information included in the first packet 101 and the password information included in the second packet 102 may be the same, but the password information included in the first packet 101 and the password information included in the second packet 102 may be different. For example, the password information 140 of the first packet 101 may be information for performing the wake-up, and the password information 140 of the second packet 102 may be information for performing the setting operation.

Meanwhile, an example in which the password information 140 is included in both of the first packet 101 and the second packet 102 is illustrated in FIG. 11B, but the password information 140 may be included in only one of the first packet 101 and the second packet 102. As shown in FIGS. 11A and 11B, when the wake-up packet 100 includes the plurality of packets 101 and 102, the communication unit 220 may sequentially transmit the first packet 101 and the second packet 102 according to control of the control unit 230. For example, the communication unit 220 may first transmit the first packet 101 and then transmit the second packet 102, or may first transmit the second packet 102 and then transmit the first packet 101.

The storage unit 240 may temporarily or permanently store data and a program for an operation of the transmission device 200. For example, the storage unit 240 may store the address information of the reception device 300 connected to the transmission device 200. The storage unit 240 may store the ID information of the reception device 300 which is selected by the user, that is, which is to be woken up, or the ID information of the reception device 300. Further, the storage unit 240 may store functions which are performed by the reception device 300, or the operation code corresponding to each function. The storage unit 240 may store the function selected by the user or the operation code corresponding to a corresponding function. The storage unit 240 may store the wake-up packet 100 generated through the control unit 230.

The storage unit 240 may include a storage medium of at least one type among a flash memory type, a hard disk type, a multimedia card micro type, and a card-type memory (for example, SD or XD memory, etc.), a random access memory (RAM), a static random access memory (SRAM), a read only memory (ROM), an electrically erasable programmable read only memory (EEPROM), a programmable read only memory (PROM), a magnetic memory, a magnetic disk, an optical disk. However, the storage unit 240 is not limited thereto, and may be implemented in arbitrarily different types which are known to those of ordinary skill in the art. Further, the transmission device 200 may operate a web storage performing a storage function on the Internet.

Referring to FIG. 4 again, the reception device 300 may include the communication unit 320, the control unit 330, the wake-up unit 350, the function setting unit 360, and the storage unit 340. Here, the control unit 330, the wake-up unit 350, and the function setting unit 360 may be provided as a single processor or a single device, or may be separately provided as a plurality of processors or a plurality of devices.

The communication unit 320 may be connected to the transmission device 200 through a wired or wireless network 400 and receive the wake-up packet 100 from the transmission device 200. For this, the communication unit 320 may include various communication modules such as a wireless Internet module, a local area communication module, and a mobile communication module. Since the wireless Internet module, the local area communication module, and the mobile communication module may be the same as those described with reference to the communication unit 220 of the transmission unit 200, description thereof will be omitted. Further, when communicating with the transmission device 200 and receiving the packet or information included in the packet, the communication unit 320 may apply another type of communication module besides the communication modules described above.

Particularly, the communication unit 320 may receive at least one wake-up packet 100 transmitted through the wired or wireless network 400. That is, as shown in FIGS. 5 and 10, when the wake-up information 120 and the operational information 130 are transmitted as one wake-up packet 100, one wake-up packet 100 may be received, and when the wake-up packet 100 is configured as the plurality of packets 101 and 102, all of the plurality of packets 101 and 102 may be received.

The control unit 330 may read the received wake-up packet 100. The control unit 330 may be provided as a plurality of layers, that is, the application layer 330a, the transport layer 330b, the network layer 330c, and the link layer 330d as shown in FIG. 6, exclude the header 110 included in the wake-up packet 100, and then read data of the wake-up packet 100. The wake-up packet 100 may be transmitted to the link layer 330d through the communication unit 320, and exclude the header 100 corresponding to each layer while sequentially passing through the link layer 330d, the network layer 330c, the transport layer 330b, and the application layer 330a.

For example, when the wake-up packet 100 includes the link header 111, the IP header 112, the TCP header 113a, the wake-up information 120, and the operational information 130 as shown in FIG. 6, the link header 111 may be excluded while the wake-up packet 100 passes through the link layer 330d, the IP header 112 may be excluded while passing through the network layer 330c, the TCP header 113a may be excluded while passing through the transport layer 330b, and data including the wake-up information 120 and the operational information 130 may remain in the application layer 330a.

Meanwhile, as shown in FIGS. 11A and 11B, when the wake-up packet 100 is configured as the plurality of packets 101 and 102, the control unit 330 may obtain the wake-up information from the first packet 101 and the operational information from the second packet 102 using the plurality of layers 330a to 330d described above. The control unit 330 may generate a control signal for controlling the wake-up unit 350 and the function setting unit 360 based on the data of the application layer 330a, that is, the wake-up information 120 and the operational information 130.

First, the control unit 330 may control the wake-up unit 350 based on the wake-up information 120. As described above, the wake-up information 120 may include the wake-up ID 121, and the Wakee address 122, and the control unit 330 may determine whether the Wakee address 122 is identical to its own ID information. When the Wakee address 122 is identical to its own ID information, the control unit 330 may control the wake-up unit 350 according to the wake-up ID. The wake-up unit 350 may turn on the reception device 300 or supply the power to the reception device 300 based on the control signal of the control unit 330. Further, when the Wakee address 122 is not identical to its own ID information, the control unit 330 may control the wake-up unit 350 to maintain the sleep mode.

For example, when the Wakee address 122 is provided as the MAC address, the control unit 330 may determine whether the MAC address of the Wakee is identical to its own MAC address, control the wake-up unit 350 to perform the wake-up when the MAC address of the Wakee is identical to its own MAC address, and control the wake-up unit 350 to maintain in the sleep mode when the MAC address of the Wakee is not identical to its own MAC address.

Meanwhile, as shown in FIG. 12, when the wake-up information 120 is generated according to a standard protocol which is previously prescribed, the control unit 330 may obtain the wake-up information 120 from the first packet, and control the wake-up unit 350 based on the obtained wake-up information 120. For example, the control unit 330 may obtain a repeated MAC address from the wake-up information 120, control the wake-up unit 350 to perform the wake-up when the obtained MAC address is identical to its own MAC address, and control the wake-up unit 350 to maintain the sleep mode when the obtained MAC address is not identical to its own MAC address. The control unit 330 may control the function setting unit 360 based on the operational information 130. As describe above, the operational information 130 may be provided in a form of the operation code, and at this time, the operation code may refer to an operation code for setting a function selected by the user among functions capable of being performed in the reception device 300. The control unit 330 may control the function setting unit 360 to set a function corresponding to the operation code when the reception device 300 is woken up. The storage unit 340 may previously store the operation code corresponding to each function of the reception device 300, and the control unit 330 may determine a function corresponding to an operation code by comparing the operation code stored in the storage unit 340 and the operation code provided in the operational information 130, and may control the function setting unit 360 to set the determined function.

Meanwhile, the operation code stored in the storage unit 340 of the reception device 300 may be the same as that stored in the storage unit 240 of the transmission device 200. For example, as described above, when the storage unit 240 of the transmission device 200 may store the operation code "0" corresponding to the operation of setting the screen mirroring function, store the operation code "1" corresponding to the operation of setting the allshare function, and store the operation code "2" corresponding to the operation of setting the second screen function, the storage unit 340 of the reception device 300 may also store the operation code "0" corresponding to the operation of setting the screen mirroring function, store the operation code "1" corresponding to the operation of setting the allshare function, and store the operation code "2" corresponding to the operation of setting the second screen function.

In an example described above, when the operation code of the operational information 130 is 0, the control unit 330 may generate a control signal for setting the function corresponding to the operation code "0", that is, the screen mirroring function, and the function setting unit 360 may set the screen mirroring function according to the control signal.

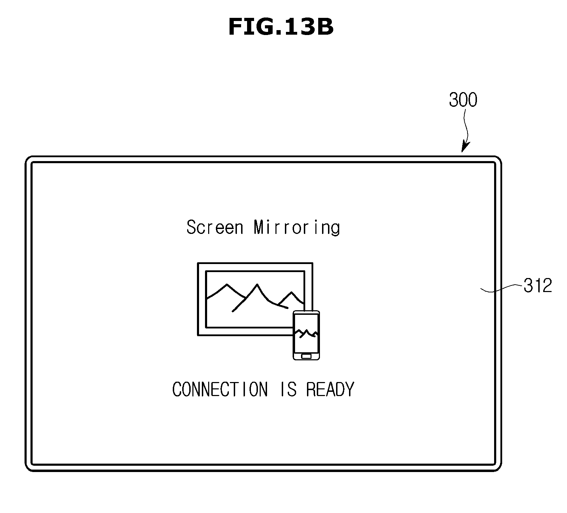

FIGS. 13A and 13B are diagrams for describing an operation of setting a screen mirroring function. In FIGS. 13A and 13B, an example in which the transmission device 200 is implemented by a terminal and the reception device 300 is implemented by a smart television is illustrated.

Generally, in order to perform the screen mirroring function of the reception device 300, the user may push an external input button or click an external input icon through the user interface unit 210 included in the transmission device 200 as shown in FIG. 13A. According to the external input selection of the user, the reception device 300 may display the user interface unit 310 of the reception device 300 or a screen for setting TV/external input on the display unit 312. For example, the display unit 312 may display a "TV" icon for performing a conventional television function such as reception of broadcasting, a "Mirroring" icon for performing the screen mirroring function for associating with the transmission device 200, a "USB" icon for reading and playing a file or data of a Universal Serial Bus (USB), and an "Allshare" icon for performing the allshare function sharing the file.

The user may select the "Mirroring" icon among the icons displayed on the display unit 312. The user may select the "Mirroring" icon through the user interface unit 210 of the transmission device 200, or select the "Mirroring" icon through the user interface unit 310 of the reception device 300.

According to the selection of the "Mirroring" icon of the user, the display unit 312 may be converted into the screen as shown in FIG. 13B. That is, a screen indicating that connection with another device providing a multimedia image of the transmission device 200 or the transmission device 200 is ready may be displayed. When the reception device 300 is connected to the transmission device 200 or another device, the screen mirroring function is performed.

As described above, in order to perform the screen mirroring function of the reception device 300, generally, a manual input of the user may be required. That is, the user may perform a first manual input for the selection of the external input, and a second manual input for the selection of the "Mirroring" icon. Further, in order to perform the screen mirroring function of the reception device 300, generally, a screen conversion of the reception device 300 may be required. That is, the display unit 312 may be converted a first screen for setting the TV/external input into a second screen indicating that the connection is ready.

On the other hand, when the control unit 330 generates the control signal for setting the screen mirroring function according to an operation code of the operational information 130, the first manual input and the second manual input of the user may be omitted. Further, the first screen output may be omitted. Although there are not the first manual input and the second manual input, the function setting unit 360 may perform the operation of setting the screen mirroring function according to the control signal of the control unit 330, and immediately display the second screen shown in FIG. 13B.

An example of the wake-up packet 100 including the header 110, the wake-up information 120, and the operational information 130 is illustrated and described above, but the wake-up packet 100 may further include the password information 140 shown in FIGS. 10A, 10B, and 11B.

In this case, the control unit 330 may sequentially pass the wake-up packet 100 through the plurality of layers, exclude the header 100 included in the wake-up packet 100, and read the data of the wake-up packet 100, that is, the wake-up information 120, the operational information 130, and the password information 140.

The control unit 330 may control the wake-up unit 350 based on the wake-up information 120.

When the password 142 included in the password information 140 is a password for performing the wake-up, the control unit 330 may control the wake-up unit 350 based on the wake-up information 120 and the password information 140. First, the control unit 330 may determine whether an input password is identical to the password 142 of the password information 140. At this time, the input of the password may be directly input from the user through the user interface unit 310 or may be automatically input by the control unit 330. When it is determined that the input password is identical to the password 142 of the password information 140, the control unit 330 may control the wake-up unit 350 based on the wake-up information 120. Since the control of the wake-up unit 350 has been described above, description thereof will be omitted below.

The control unit 330 may control the function setting unit 360 based on the operational information 130.

When the password 142 included in the password information 140 is the password for performing the setting operation, the control unit 330 may control the function setting unit 360 based on the operational information 130 and the password information 140. First, the control unit 330 may determine whether the input password is identical to the password 142 of the password information 140. When it is determined that the input password is identical to the password 142 of the password information 140, the control unit 330 may control the function setting unit 360 based on the operational information 130. Since the control of the function setting unit 360 has been described above, description thereof will be omitted below.

The storage unit 340 may temporarily or permanently store data and a program for the operation of the reception device 300. For example, the storage unit 340 may store the wake-up packet transmitted from the transmission device 200. The storage unit 340 may previously store the operation code corresponding to each function of the reception device 300. At this time, the operation code stored in the storage unit 340 may be identical to the operation code stored in the storage unit 240 of the transmission device 200. Further, the storage unit 340 may store its own address information and ID information.

The storage unit 340 may include a storage medium of at least one type among a flash memory type, a hard disk type, a multimedia card micro type, and a memory having a card type (for example, an SD or XD memory), a RAM, an SRAM, a ROM, an EEPROM, a PROM, a magnetic memory, a magnetic disk, and an optical disk. However, the storage unit 340 is not limited thereto, and may be implemented in arbitrarily different types which are known to those of ordinary skill in the art. Further, the reception device 300 may operate a web storage performing a storage function on the Internet.

The transmission device 200 and the reception device 300 for transmitting and receiving the wake-up packet, and the wake-up system 1 including them are described based on the block diagrams of exemplary embodiments, and a wake-up method will be described with reference to a flowchart below.

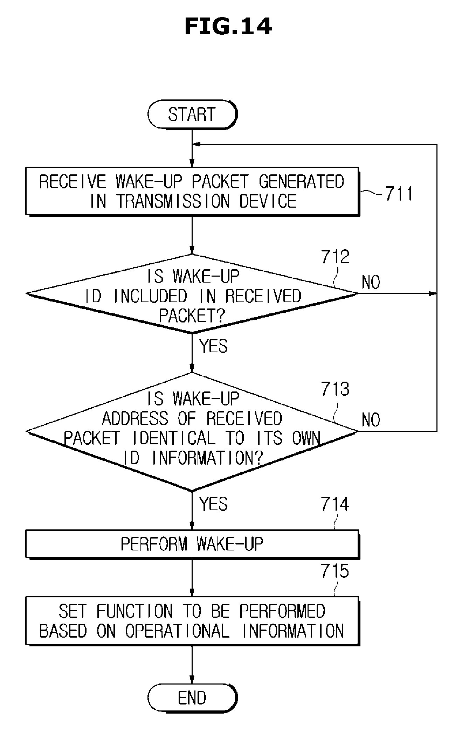

FIG. 14 is a flowchart for describing a wake-up method in accordance with one embodiment of the present invention.

Referring to FIG. 14, first, the reception device 300 may receive the wake-up packet 100 generated in the transmission device 200 (S711). Since the method in which the transmission device 200 generates the wake-up packet 100 is described above, detailed description thereof will be omitted. Further, the wake-up packet 100 may include the header 110, the wake-up information 120, and the operational information 130.

After receiving the packet from the transmission device 200, the reception device 300 may determine whether the wake-up ID 121 is included in the received packet, and confirm whether the received packet is the wake-up packet 100 (S712).

The reception device 300 may exclude the header of the received packet, and read the data. The reception device 300 may determine whether the wake-up ID 121 such as the WOL, and the WoWLAN is included in the data.

When the wake-up ID 121 is not included in the data, the reception device 300 may determine that the received packet is not the wake-up packet 100, and return to the operation S711.

When the wake-up ID 121 is included in the data, the reception device 300 may determine that the received packet is the wake-up packet 100, and may determine whether the Wakee address 122 of the received wake-up packet 100 is identical to its own ID information (S713).

When its own ID information is not identical to the Wakee address 122, the reception device 300 may return to the operation S711.

When its own ID information is identical to the Wakee address 122, the reception device 300 may perform the wake-up according to the wake-up ID (S714). That is, the reception device 300 may be turned on and woken up from the sleep mode.

After performing the wake-up, the reception device 300 may perform the setting operation of setting a function to be performed based on the operational information 130 of the received wake-up packet 100 (S715).

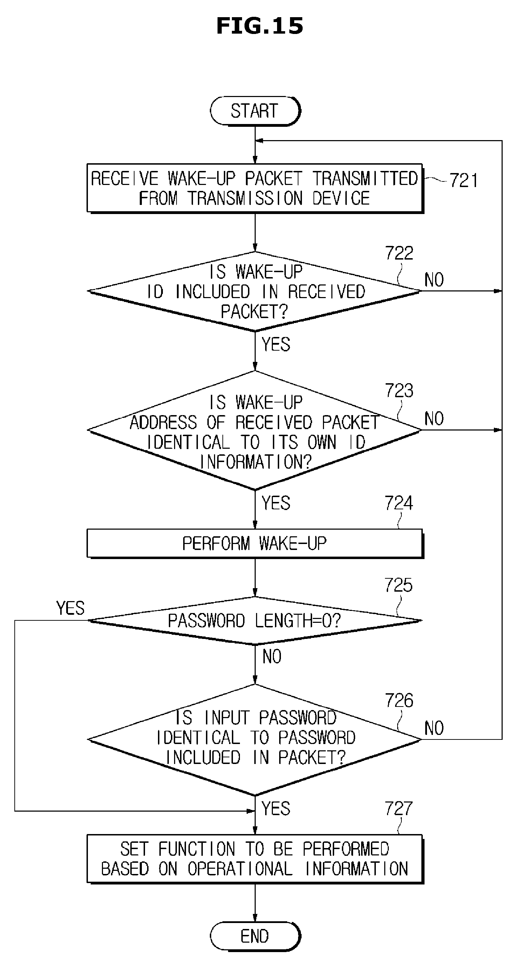

FIG. 15 is a flowchart for describing a wake-up method in accordance with another embodiment of the present invention.

Referring to FIG. 15, first, the reception device 300 may receive the wake-up packet 100 generated in the transmission device 200 (S721). At this time, the wake-up packet 100 may include the header 110, the wake-up information 120, the operational information 130, and the password information 140.

Next, in order to confirm whether the received packet is the wake-up packet 100, the reception device 300 may determine whether the wake-up ID 121 is included in the received packet (S722). The reception device 300 may exclude the header of the received packet and read the data. The reception device 300 may determine whether the wake-up ID such as the WOL, and the WoWLAN is included in the data.

When the wake-up ID 121 is not included in the received packet, the reception device 300 may determine that the received packet is not the wake-up packet, and return to the operation S721.

On the other hand, when the wake-up ID 121 is included in the received packet, the reception device 300 may determine that the received packet is the wake-up packet, and may determine that the WaKee address 122 of the received wake-up packet 100 is identical to its own ID information (S723).

When the Wakee address 122 of the received wake-up packet 100 is not identical to its own ID information, the reception device 300 may return to the operation S721.

When the Wakee address 122 of the received wake-up packet 100 is identical to its own ID information, the reception device 300 may perform the wake-up according to the wake-up ID 121 (S724). That is, the reception device 300 may be turned on and woken up from the sleep mode.

The reception device 300 may determine whether the password length 141 included in the password information 140 is 0 (S725). That is, it may be determined whether there is the set password 142.

When the password length 141 is not 0, it may be determined whether the input password is identical to the password 142 of the wake-up packet 100, that is, the password 142 included in the password information 140 (S726). Here, the input of the password may be directly input by the user through the user interface 310 or be automatically input by the control unit 330.

When the input password is identical to the password 142 included in the password information 140, the reception device 300 may perform the setting operation of setting a function to be performed based on the operational information 130 of the received wake-up packet 100 (S727). That is, the reception device 300 may determine whether the passwords are the same after performing the wake-up, and when the passwords are the same, perform the setting operation.

In the operation S725, when the password length 141 is 0, the reception device 300 may perform the operation S727. That is, the reception device 300 may immediately perform the setting operation after performing the wake-up.

In FIG. 15, an example in which the password 142 of the wake-up packet 100 is the password for performing the setting operation is illustrated, but the password 142 may be the password for performing the wake-up. In this case, the operations S725 and S726 may be performed between the operations S721 and S722, or between the operations S722 and S723.

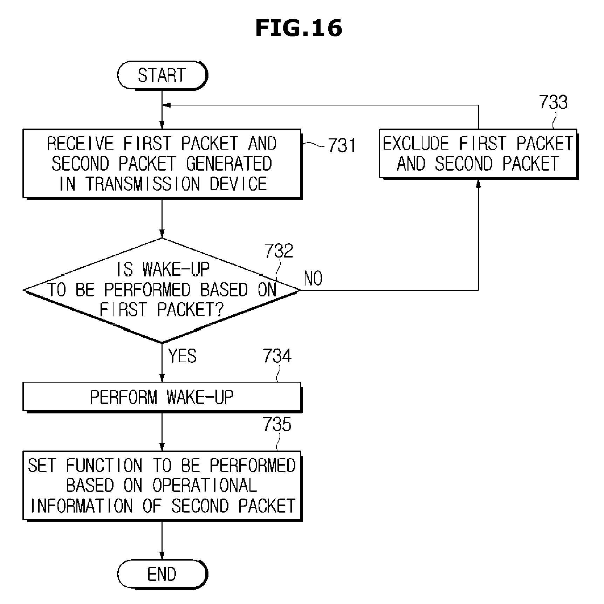

FIG. 16 is a flowchart for describing a wake-up method in accordance with still another embodiment of the present invention.

Referring to FIG. 16, first, the reception device 300 may receive the wake-up packet 100 generated in the transmission device 200 (S731). At this time, the wake-up packet may include the first packet 101 and the second packet 102 as shown in FIGS. 11A and 11B. The reception device 300 may sequentially receive the first packet 101 and the second packet 102 which are sequentially transmitted from the transmission device 200.

The reception device 300 may determine whether to perform the wake-up packet 100 based on the first packet 101 (S732). Particularly, the reception device 300 may exclude the header of the first packet 101, obtain the wake-up information from the first packet 101, and determine whether to perform the wake-up based on the obtained wake-up information 120.

Particularly, the reception device 300 may obtain a repeated MAC address from the wake-up information 120, and determine whether to perform the wake-up based on whether the MAC address obtained from the wake-up information 120 is identical to its own MAC address. That is, the reception device 300 may determine to perform the wake-up when the MAC address obtained from the wake-up information 120 is identical to its own MAC address, and determine to maintain the sleep mode when the MAC address obtained from the wake-up information 120 is not identical to its own MAC address

When it is determined that the wake-up is not to be performed ("no" of the operation S732), the reception device 300 may exclude the first packet 101 and the second packet 102 (S733), and maintain the sleep mode.

Meanwhile, when it is determined that the wake-up is to be performed ("yes" of the operation S732), the reception device 300 may perform the wake-up according to the wake-up ID 121 (S734). That is, the reception device 300 may be turned on and woken up from the sleep mode.

After performing the wake-up, the reception device 300 may perform the setting operation of setting a function performed based on the operational information 130 of the second packet 100 (S735).

According to the transmission device and the reception device for transmission and reception of the wake-up packet, and the wake-up system and the wake-up method, the transmission device can transmit the wake-up packet including not only the wake-up information but also the operational information. Further, the reception device can receive the wake-up packet, and perform the operation for setting the function after the wake-up. The setting of the function after the wake-up can be performed by transmitting and receiving the wake-up packet. Accordingly, a more convenient service can be provided to the user.

Although a few embodiments of the transmission device and the reception device for transmission and reception of the wake-up packet, the wake-up system, and the wake-up method are shown and described with reference to the accompanying drawings, it would be appreciated by those skilled in the art that changes may be made in these embodiments without departing from the principles of the invention, the scope of which is defined in the claims.

## Claims

1. A transmission device for transmission of a wake-up packet, the transmission device being connectable to a reception device and arranged to transmit a data packet using wired or wireless communication, comprising:
a transmission device control unit configured to generate the wake-up packet comprising wake-up information for waking up the reception device and operational information for setting a function performed by the reception device in response to a wake-up of the reception device; and
a transmission device communication unit configured to transmit the wake-up packet to the reception device.

2. The transmission device of claim 1, wherein a plurality of reception devices are provided as the reception device.

3. The transmission device of claim 1 or 2, wherein the wake-up packet is provided as data comprising a header, the wake-up information, and the operational information.

4. The transmission device of claim 1, 2 or 3, wherein the wake-up information comprises a wake-up identification ID and an address for a reception device to be woken up (a Wakee).

5. The transmission device of claim 4, wherein the wake-up ID comprises a control command for performing the wake-up.

6. The transmission device of claim 5, wherein the wake-up ID is provided using a wake on local area network or a wake on wireless local access network (WoWLAN).

7. The transmission device of claim 5, wherein the Wakee address comprises ID information of a Wakee which is the reception device selected to perform the wake-up among a plurality of reception devices.

8. The transmission device of claim 7, wherein the Wakee address comprises a media access control (MAC) address.

9. The transmission device of claim 7 or 8, wherein the operational information comprises a control command for setting the function to be performed by the Wakee in response to the wake-up of the Wakee.

10. The transmission device of claim 7 or 8, wherein the operational information comprises an operation code corresponding to the function to be performed by the Wakee in response to the wake-up of the Wakee.

11. The transmission device of any one of the preceding claims, wherein the wake-up packet further comprises password information, the password information comprising at least one of a password for wake-up and a password for setting a function.

12. The transmission device of any one of the preceding claims, wherein the wake-up packet comprises a first packet provided as data comprising the wake-up information, and a second packet provided as data comprising the operational information.

13. The transmission device of claim 12, wherein the communication unit is arranged to sequentially transmit the first packet and the second packet.

14. A wake-up method, comprising:
receiving a data packet from a transmission device;
determining whether the received data packet is a wake-up packet comprising wake-up information for waking up a reception device and operational information for setting a function to be performed by the reception device in response to a wake-up of the reception device; and
performing the wake-up of the reception device based on the wake-up information when the received packet is the wake-up packet and setting the function to be performed after the wake-up based on the operational information.

15. The wake-up method of claim 14, wherein the determining of whether the received data packet is the wake-up packet comprises determining whether the wake-up ID is included in the received data packet.
